# EUROPEAN PATENT APPLICATION

(11) **EP 4 534 448 A1**
(43) Date of publication of application: **09.04.2025**
(21) Application number: 22943825.4
(22) Date of filing: 27.05.2022
(51) Int. Cl.: B65G 1/00, B61B 13/00

(54) **TRANSPORT DEVICE AND TRANSPORT METHOD**

(71) Applicant: Fuji Corporation, Chiryu-shi, Aichi 472-8686 (JP)
(72) Inventor: ODA, Takuya, Chiryu-shi, Aichi 472-8686 (JP); KAWAGUCHI, Koji, Chiryu-shi, Aichi 472-8686 (JP); SAWANAMI, Hisato, Chiryu-shi, Aichi 472-8686 (JP); KITO, Shuichiro, Chiryu-shi, Aichi 472-8686 (JP)
(74) Representative: Grünecker Patent- und Rechtsanwälte PartG mbB
(86) International application number: PCT/JP2022/021837
(87) International publication number: WO 2023/228425

(57) **Abstract**

A conveyance device capable of conveying or pulling a cart having multiple wheels at a bottom portion thereof, includes a main body configured to travel, an engagement member provided in the main body and configured to engage at a predetermined position of the cart, a camera configured to capture an image of the cart, a height detection section configured to process the image of the camera to detect a height of the predetermined position of the cart, and a control section configured to cause the engagement member to engage at the predetermined position of the cart based on the height of the predetermined position of the cart detected by the height detection section.

## Description

### Technical Field

The present description discloses a conveyance device and a conveyance method.

### Background Art

Conventionally, there is known a conveyance device that raises and conveys a cart by lifting a placement section of the conveyance device to a certain height (for example, Patent Literatures 1 and 2).

### Citation List

### Patent Literature

Patent Literature 1:JP-T-2022-503595
Patent Literature 2:JP-A-2021-162968

### Summary of the Invention

### Technical Problem

However, in the conveyance devices disclosed in Patent Literatures 1 and 2, since a position at which a cart should be engaged cannot be recognized, there is a case where a placement section needs to be lifted more than a necessary amount.

A main object of the present disclosure is to more reliably engage an engagement member with a cart so that the cart can be conveyed or pulled.

### Solution to Problem

A conveyance device of the present disclosure is a conveyance device capable of conveying or pulling a cart having multiple wheels at a bottom portion thereof, and includes:
a main body configured to travel;
an engagement member provided in the main body and configured to engage at a predetermined position of the cart;
a camera configured to capture an image of the cart;
a height detection section configured to process the image of the camera to detect a height of the predetermined position of the cart; and
a control section configured to cause the engagement member to engage at the predetermined position of the cart based on the height of the predetermined position of the cart detected by the height detection section.

In addition, a conveyance method of the present disclosure has the same effect as the conveyance device of the present disclosure.

### Brief Description of Drawings

Fig. 1 is a schematic view illustrating an example of delivery system 10.
Fig. 2 is a view illustrating an example of logistics center 20.
Fig. 3 is a perspective view of basket cart 12.
Fig. 4 is a perspective view of conveyance robot 40.
Fig. 5 is a side view of conveyance robot 40.
Fig. 6 is a front view illustrating a state in which engagement member 52 is engaged with a bottom portion of basket cart 12.
Fig. 7 is a side view illustrating a state in which engagement member 52 is engaged with the bottom portion of basket cart 12.
Fig. 8A is a perspective view of contact detection sensor 58.
Fig. 8B is a perspective view of contact detection sensor 58.
Fig. 8C is a longitudinal sectional view of contact detection sensor 58.
Fig. 9 is a flowchart illustrating an example of a cart conveyance routine.
Fig. 10A is a diagram illustrating a state in which basket cart 12 is conveyed by conveyance robot 40.
Fig. 10B is a diagram illustrating a state in which basket cart 12 is conveyed by conveyance robot 40.
Fig. 10C is a diagram illustrating a state in which basket cart 12 is conveyed by conveyance robot 40.
Fig. 10D is a diagram illustrating a state in which basket cart 12 is conveyed by conveyance robot 40.
Fig. 11 is a flowchart illustrating a cart conveyance routine according to a modification example.
Fig. 12 is a flowchart illustrating a cart conveyance routine according to a modification example.

### Description of Embodiments

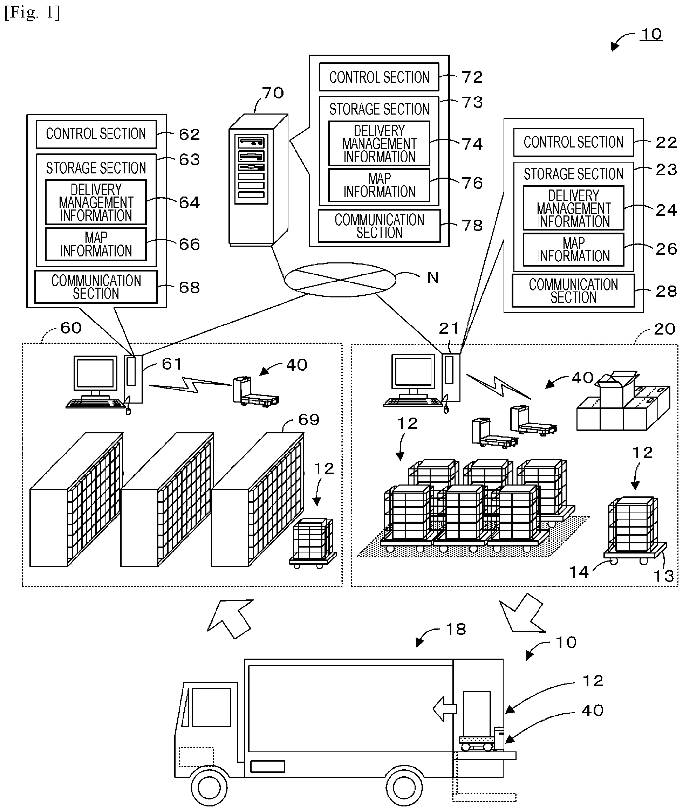

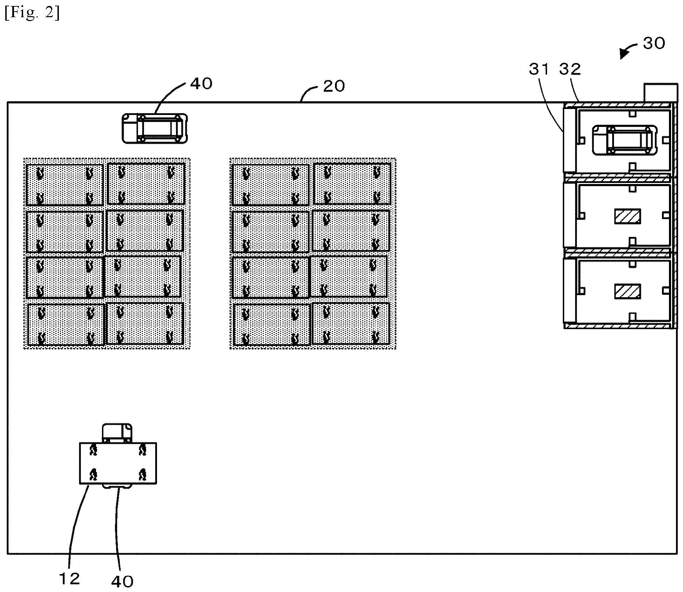

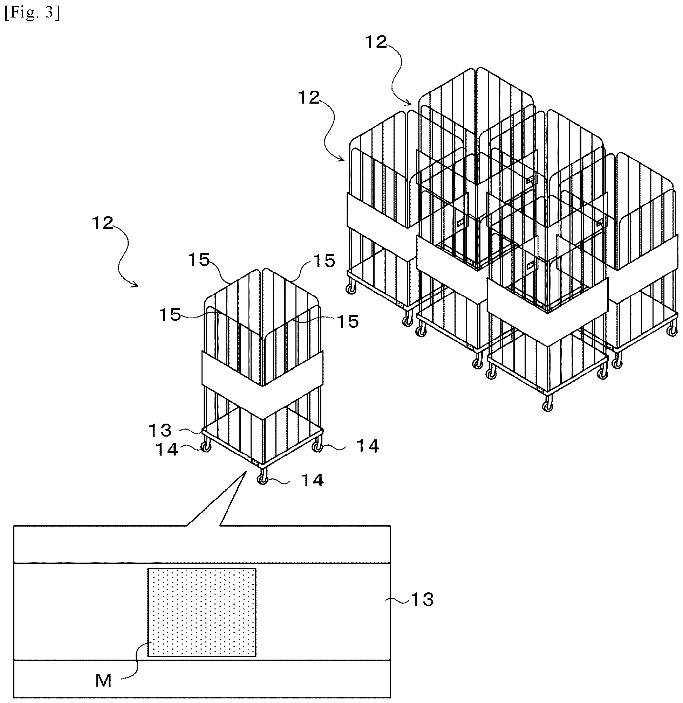

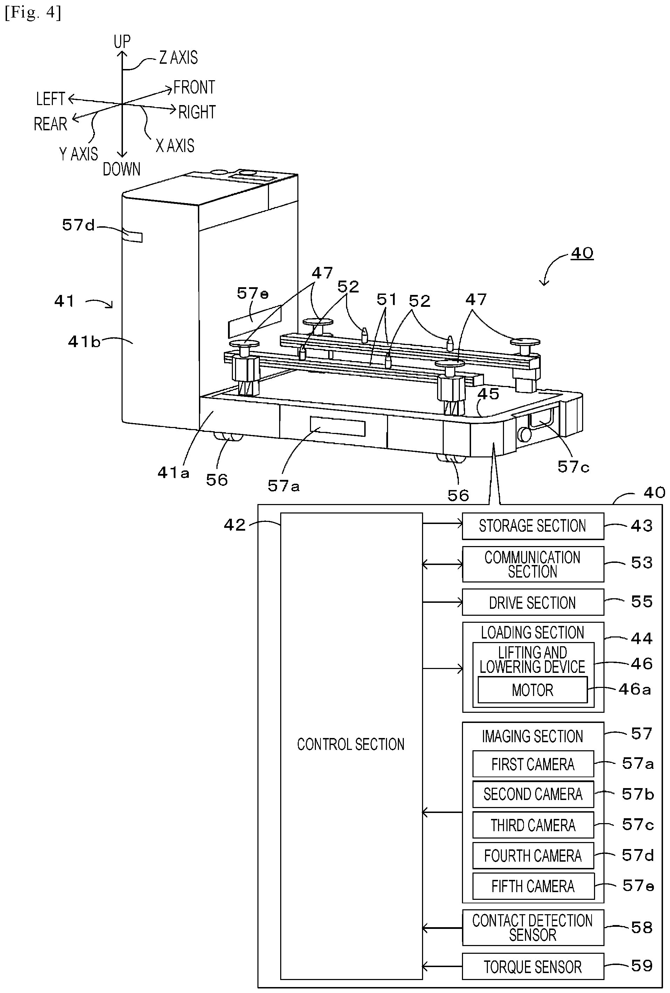

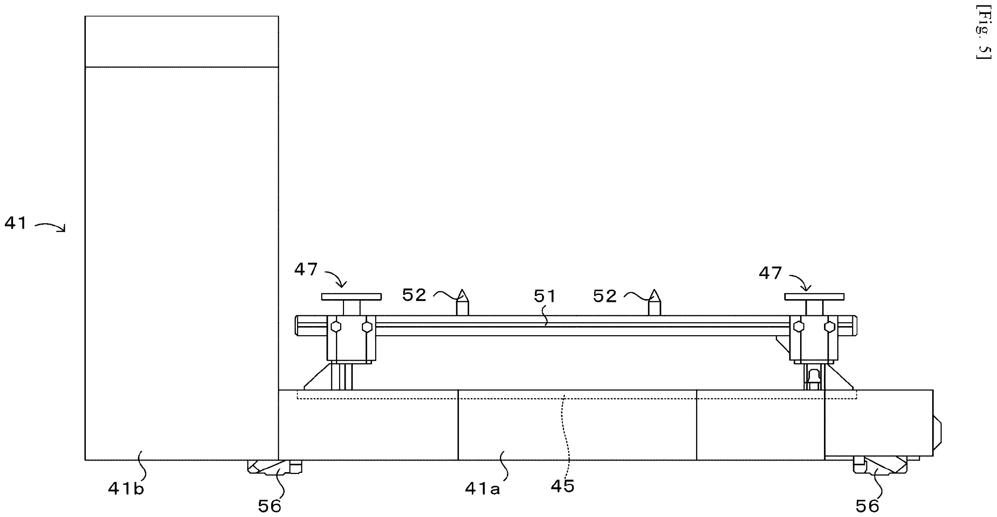

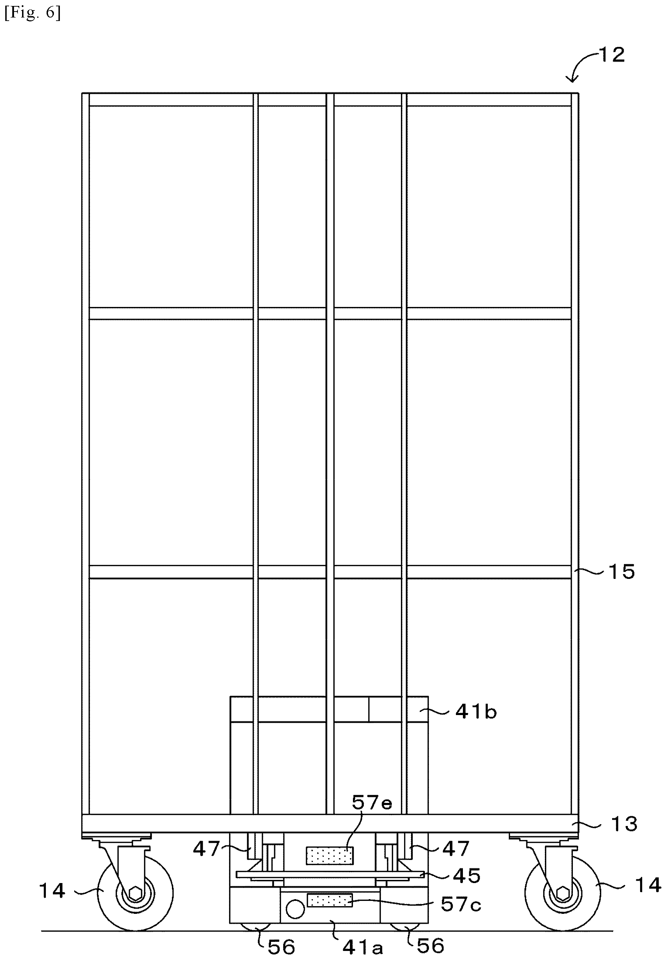

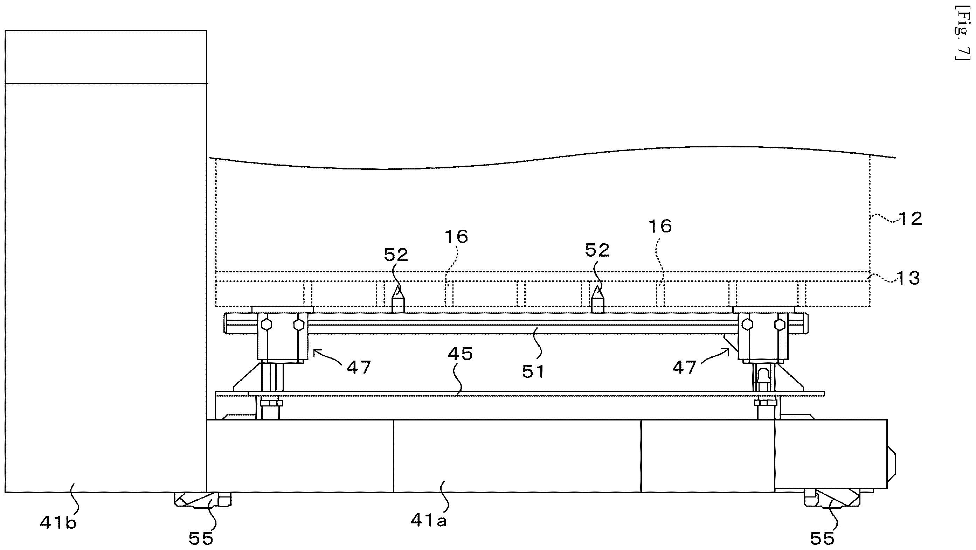

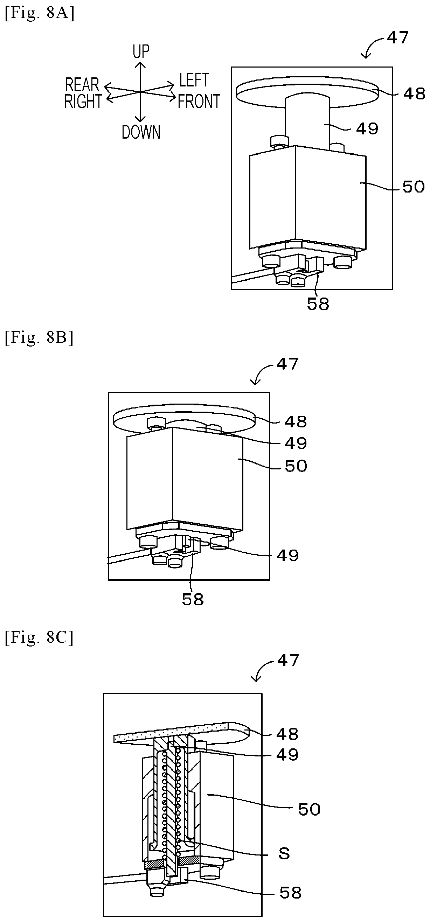

Next, an embodiment for carrying out the invention of the present disclosure will be described with reference to the drawings. Fig. 1 is a schematic view illustrating an example of delivery system 10. Fig. 2 is a view illustrating an example of logistics center 20. Fig. 3 is a perspective view of basket cart 12. Fig. 4 is a perspective view of conveyance robot 40. Fig. 5 is a side view of conveyance robot 40. Fig. 6 is a front view illustrating a state in which engagement member 52 is engaged with a bottom portion of basket cart 12. Fig. 7 is a side view illustrating a state in which engagement member 52 is engaged with the bottom portion of basket cart 12. Figs. 8A and 8B are perspective views of contact detection sensor 58. Fig. 8C is a longitudinal sectional view of contact detection sensor 58. An X-axis direction (left-right direction), a Y-axis direction (front-rear direction), and a Z-axis direction (up-down direction) are as illustrated in the drawings.

As illustrated in Fig. 1, delivery system 10 includes logistics PC 21, shop PC 61, conveyance robot 40, and central control device 70. Delivery system 10 is used in basket cart 12, delivery vehicle 18, logistics center 20, shop 60, and the like.

Delivery vehicle 18 is a vehicle that is loaded with one or more basket carts 12 and delivers articles. Delivery vehicle 18 delivers the articles between delivery bases. Here, the "delivery base" includes logistics center 20, shop 60, and the like in which the articles are collected. Delivery vehicle 18 loads basket cart 12 on which the article is placed at logistics center 20 in a baggage compartment, delivers the article to a delivery destination, and returns empty basket cart 12 to logistics center 20.

Logistics center 20 is a place for collecting articles and delivering the articles to shops 60 or other logistics centers 20 in various locations. As illustrated in Fig. 1, logistics center 20 has one or more conveyance robots 40, and can automatically move basket cart 12. Logistics center 20 has, for example, waiting space 30 (see Fig. 2) in a specific region of a floor surface, and conveyance robot 40 waits in waiting space 30 when no work such as movement of an article is performed. In logistics center 20, a worker, an arm robot (not illustrated), or the like performs an operation of placing an article on basket cart 12. Conveyance robot 40 conveys basket cart 12 whose delivery destination is specified to a designated place by the pulling.

Logistics PC 21 is provided in logistics center 20 and is configured as a management device that performs product management, and the like in logistics center 20. Logistics PC 21 includes control section 22, storage section 23, and communication section 28. Control section 22 includes CPU and controls the entire device. Storage section 23 stores various application programs and various data files. Storage section 23 stores delivery management information 24, map information 26, and the like. Delivery management information 24 is information used for managing delivery of the articles. Map information 26 is information of a map of logistics center 20. Communication section 28 wirelessly communicates with an external device such as conveyance robot 40. Communication section 28 exchanges information with central control device 70 and shop PC 61 via network N.

Waiting space 30 is configured as a garage which has a floor surface, a ceiling, and a wall surface and on which conveyance robot 40 waits. Door 31 and wall portion 32 are provided in waiting space 30. Door 31 is an electric garage shutter, and conveyance robot 40 can enter and exit waiting space 30 in an open state. Door 31 is provided with an opening and closing device (not illustrated), and is opened and closed according to an opening and closing signal from conveyance robot 40. Wall portion 32 is a member that partitions waiting space 30 into spaces for respective conveyance robots 40, and faces a side surface or a rear surface of conveyance robot 40.

Charging device 33 is disposed in waiting space 30. Charging device 33 is a device that is provided in waiting space 30 and charges a driving power storage battery in conveyance robot 40 when conveyance robot 40 waits. Charging device 33 charges a storage battery using any one of the wireless charging methods, for example, an electromagnetic induction method, a magnetic field resonance method, or an electric field coupling method. Alternatively, charging device 33 may be connected by wire using a plug method to charge the storage battery. For example, charging device 33 may start charging when receiving a signal from conveyance robot 40, or may start charging when a sensor (not illustrated) detects conveyance robot 40.

As illustrated in Fig. 3, basket cart 12 includes placement section 13, casters 14, fence members 15, and marker M. Placement section 13 is a flat plate-shaped member on which articles are loaded. Engaged section 16 (see Fig. 6) protruding downward in a lattice shape is formed on a lower surface of placement section 13. Casters 14 have wheels on which basket cart 12 travels, and are provided at four corners of the lower surface of placement section 13. Fence member 15 is a member that prevents the package placed on placement section 13 from falling from placement section 13, and is disposed so as to stand from a peripheral edge portion of the upper surface of placement section 13. Marker M is a recognition target indicating an ID of basket cart 12. Marker M is, for example, an AR marker. Marker M is attached to the side surface of placement section 13 so as to be recognized by conveyance robot 40.

Conveyance robot 40 is a vehicle that automatically moves basket cart 12 as a conveyance object. Conveyance robot 40 enters the space between casters 14 on the lower surface side of placement section 13 of basket cart 12, engages with engaged section 16, connects to basket cart 12, and pulls basket cart 12. Conveyance robot 40 is, for example, an autonomous mobile robot (AMR) that detects the surroundings and moves along a free route. As illustrated in Fig. 4, conveyance robot 40 includes vehicle body section 41, control section 42, storage section 43, loading section 44, communication section 53, drive section 55, traveling wheels 56, imaging section 57, contact detection sensor 58, and torque sensor 59.

Vehicle body section 41 has a substantially L shape in a side view, and is a housing that can enter the lower surface of basket cart 12. Vehicle body section 41 includes horizontal section 41a and upright section 41b. Horizontal section 41a is a flat plate-shaped portion that can enter the lower surface of basket cart 12. Horizontal section 41a has traveling wheels 56 on a lower surface side and loading section 44 on an upper surface side. Upright section 41b is a portion that is connected to an end portion of horizontal section 41a and stands higher than horizontal section 41a. Inside upright section 41b, control section 42, storage section 43, communication section 53, a storage battery, and the like are accommodated.

Control section 42 is a controller that controls entire conveyance robot 40. Control section 42 outputs control signals and the like to drive section 55, imaging section 57, and communication section 53, and inputs signals from imaging section 57 and communication section 53. Control section 42 acquires images of the surroundings from imaging sections 57 (first to fifth cameras 57a to 57e) at predetermined time intervals (minute time) during traveling of conveyance robot 40, and recognizes the self-location (three-dimensional coordinates) of conveyance robot 40 in logistics center 20 based on the images of the surroundings, map information 26, and the driving state of drive section 55.

Storage section 43 stores various application programs and various data files. Storage section 43 stores, for example, position information including positions of a delivery source and a delivery destination to which basket cart 12 is moved, map information of logistics center 20, and the like. The position information and the map information are acquired by communication from logistics PC 21.

Loading section 44 is connected to basket cart 12 by moving upward from vehicle body section 41 (horizontal section 41a) of conveyance robot 40 and engaging with engaged section 16 of basket cart 12 (see Fig. 4). Loading section 44 includes lifting and lowering section 45, elastic support member 47, coupling member 51, and engagement member 52. Lifting and lowering section 45 is a rectangular member provided to be movable up and down with respect to vehicle body section 41 using motor 46a of lifting and lowering device 46 as a drive source.

Elastic support member 47 is a member that elastically supports placement section 13 of basket cart 12 from the lower surface. Elastic support member 47 is provided at each of four corners of lifting and lowering section 45. As illustrated in Figs. 8A, 8B, and 8C, elastic support member 47 includes support body 48, piston 49, cylinder 50, and spring S. Support body 48 is a disk-shaped member whose upper surface can come into contact with the lower surface of basket cart 12 (placement section 13). Piston 49 is provided to be movable up and down with respect to cylinder 50. Support body 48 is attached to an upper surface of piston 49. Piston 49 is biased upward by the elastic force of spring S, and an upper end portion thereof normally protrudes from cylinder 50 (see Fig. 8A). Meanwhile, when lifting and lowering device 46 is driven to lift elastic support member 47 together with lifting and lowering section 45 in a state where vehicle body section 41 enters the lower side of basket cart 12, the upper surface of support body 48 comes into contact with the lower surface of placement section 13. When lifting and lowering device 46 is further driven to lift lifting and lowering section 45, piston 49 is pushed down against the elastic force of spring S, and the lower end portion protrudes from below cylinder 50 (see Figs. 8B and 8C).

Coupling member 51 is a member that couples elastic support members 47 arranged in the left-right direction. Engagement member 52 engages with engaged section 16 formed on the lower surface of placement section 13 on basket cart 12 when basket cart 12 is conveyed. Engagement member 52 is a pin-like member protruding upward from coupling member 51. Engagement member 52 is positioned at a position lower than the bottom portion (placement section 13) of basket cart 12 in a state where lifting and lowering section 45 is positioned at the lowest position by lifting and lowering device 46. The position of engagement member 52 at this time is referred to as an initial position. Meanwhile, in a state in which vehicle body section 41 (horizontal section 41a) enters the lower side of basket cart 12 (placement section 13), when lifting and lowering section 45 (engagement member 52) is lifted by lifting and lowering device 46, engagement member 52 engages with engaged section 16 (see Figs. 6 and 7). The position of engagement member 52 at this time is referred to as an engagement position.

Communication section 53 is an interface that wirelessly exchanges information with an external device such as logistics PC 21. Control section 42 exchanges information with logistics PC 21 via communication section 53.

Drive section 55 includes a motor that is connected to each of traveling wheels 56 and rotationally drives connected traveling wheels 56 to drive conveyance robot 40 to travel. Conveyance robot 40 has four traveling wheels 56, and moves by rotational driving of traveling wheels 56. Traveling wheels 56 may also be mecanum wheels or omni wheels that can be moved vertically and horizontally by independent driving of four wheels. From the viewpoint of the degree of freedom of movement, it is more preferable that traveling wheels 56 are mecanum wheels.

Imaging section 57 can detect an object existing around conveyance robot 40 and the distance thereof, and can read marker M attached to basket cart 12. Imaging section 57 includes first to fifth cameras 57a to 57e. First to fifth cameras 57a to 57e are configured as, for example, stereo cameras. First camera 57a and second camera 57b are provided on front and rear surfaces of horizontal section 41a, third camera 57c is provided on a right surface of horizontal section 41a, fourth camera 57d is provided on a left surface of upright section 41b, and fifth camera 57e is provided on a right surface of upright section 41b. First to fifth cameras 57a to 57e output the image signals to control section 42.

Contact detection sensor 58 is a sensor capable of detecting contact between engagement member 52 and the lower surface of placement section 13. As illustrated in Figs. 8A to 8C, contact detection sensor 58 is provided on the lower surface of cylinder 50. Contact detection sensor 58 is, for example, an optical sensor including a light projecting section and a light receiving section, both of which are not illustrated. When engagement member 52 is not in contact with engaged section 16 (when support body 48 is not in contact with the lower surface of placement section 13), piston 49 is pushed up by the elastic force of spring S. Accordingly, the lower end portion of piston 49 does not protrude downward with respect to cylinder 50 (see Fig. 8A), and the light from the light projecting section is received by the light receiving section. Accordingly, contact detection sensor 58 outputs an ON signal to control section 42. Meanwhile, when engagement member 52 is in contact with engaged section 16 (when support body 48 is in contact with the lower surface of placement section 13), piston 49 is pushed down against the elastic force of spring S. Accordingly, the lower end portion of piston 49 protrudes downward with respect to cylinder 50 (see Figs. 8B and 8C) and blocks the light from the light projecting section. Accordingly, contact detection sensor 58 outputs an OFF signal to control section 42.

Torque sensor 59 can detect the torque of motor 46a. Torque sensor 59 outputs the detected torque of motor 46a to control section 42.

As illustrated in Fig. 1, shop 60 displays and sells the delivered articles. Shop 60 has one or more conveyance robots 40 and can automatically move basket cart 12. Shop 60 also has waiting space 30 described above. Shop 60 has display shelf 69 on which the articles are displayed, and a worker displays the articles on the display shelf. Shop PC 61 is disposed in shop 60 and is configured as a management device that performs product management or the like in shop 60. Shop PC 61 includes control section 62, storage section 63, and communication section 68. Control section 62 includes CPU and controls the entire device. Storage section 63 stores various application programs and various data files. Storage section 63 stores delivery management information 64, map information 66, and the like. Delivery management information 64 is information used for managing delivery of the articles. Map information 66 is information of a map of shop 60. Communication section 68 wirelessly communicates with an external device such as conveyance robot 40. Communication section 68 exchanges information with central control device 70 and logistics PC 21 via network N.

Central control device 70 is a device that manages delivery system 10. Central control device 70 includes control section 72, storage section 73, and communication section 78. Control section 72 includes CPU and controls the entire device. Storage section 73 stores various application programs and various data files. Storage section 73 stores delivery management information 74 that is a database used for managing delivery of articles, map information 76 that is a database of maps of logistics center 20 and shop 60, and the like. Communication section 78 exchanges information with an external device such as logistics PC 21 and shop PC 61 via network N.

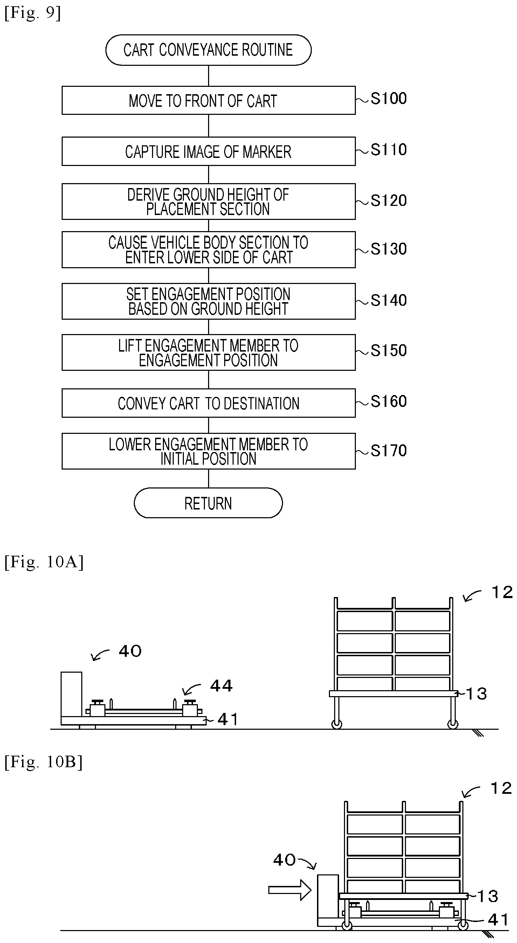

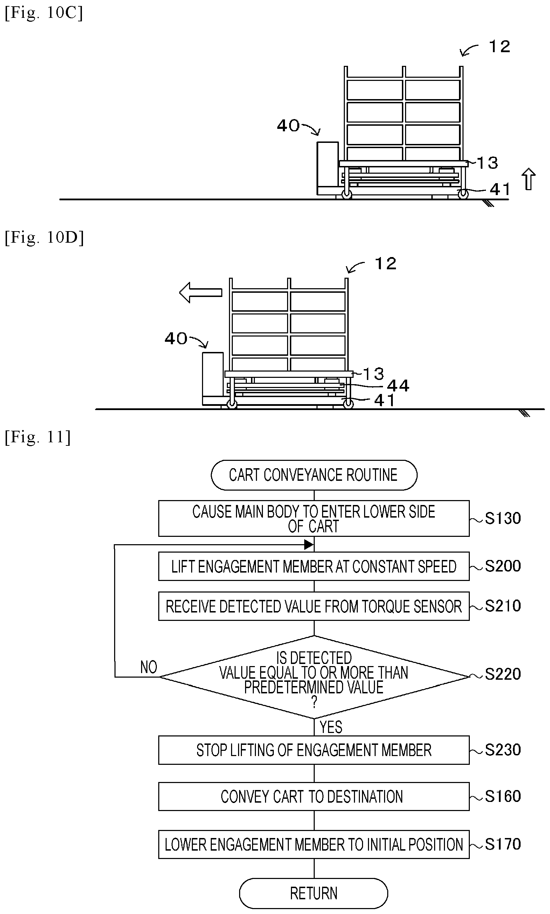

Next, a process in which conveyance robot 40 conveys basket cart 12 in logistics center 20 in delivery system 10 configured as described above will be described with reference to Figs. 9 and 10. Here, the process in which conveyance robot 40 conveys basket cart 12 to delivery vehicle 18 will be described as a specific example. Fig. 9 is a flowchart illustrating an example of a cart conveyance routine. Figs. 10A to 10D are diagrams illustrating a state in which conveyance robot 40 conveys (pulls) basket cart 12.

This routine is executed by control section 42 when control section 22 of logistics PC 21 selects any one of multiple conveyance robots 40, transmits the current position of basket cart 12 to be conveyed and the target position of the conveyance destination to conveyance robot 40, and then control section 42 of conveyance robot 40 receives the current position and the target position.

When this routine is started, as illustrated in Fig. 10A, control section 42 of conveyance robot 40 controls drive section 55 so that conveyance robot 40 moves to the front of basket cart 12 to be conveyed (S100). Control section 42 estimates the self-location in logistics center 20 based on the data input from imaging section 57, and controls drive section 55 so that the estimated self-location moves to the front of basket cart 12 to be conveyed.

Next, control section 42 causes third camera 57c to capture an image of marker M (AR marker) (S110). Subsequently, control section 42 derives the ground height of placement section 13 (S120). This process is executed as follows. That is, first, control section 42 recognizes the shape and size of marker M based on the image captured in S120. Next, control section 42 obtains the relative height of marker M with respect to third camera 57c based on the recognized shape and size of marker M and the actual shape size of marker M stored in advance in storage section 43. Next, control section 42 derives the ground height of placement section 13 by adding the relative height to the ground height of third camera 57c.

Then, as illustrated in Fig. 10B, control section 42 controls drive section 55 so that vehicle body section 41 (horizontal section 41a) enters the lower side of basket cart 12 (placement section 13) (S130). Next, the engagement position of engagement member 52 is set based on the ground height of placement section 13 derived in S120 (S140). Specifically, control section 42 sets a position slightly lower than the ground height of placement section 13 as the engagement position of engagement member 52.

Subsequently, control section 42 lifts the engagement member to the engagement position (S150). Specifically, control section 42 derives the driving amount of motor 46a based on the difference between the engagement position obtained in S140 and the initial position, and causes motor 46a to be driven by the derived driving amount. Accordingly, since engagement member 52 can be positioned with respect to engaged section 16 without excess or deficiency, engagement member 52 can be reliably engaged with engaged section 16.

Then, control section 42 searches for a route from the current location to the destination based on the map information, and controls drive section 55 so that basket cart 12 is conveyed to the destination according to the route (S160). When conveyance robot 40 arrives at the destination, control section 42 controls lifting and lowering device 46 so that engagement member 52 is lowered to the initial position (S 170). Thereafter, control section 42 ends the routine.

Here, a correspondence relationship between the elements of the present embodiment and the elements of the present disclosure will be clarified. Conveyance robot 40 of the present embodiment corresponds to a conveyance device, engagement member 52 corresponds to an engagement member, third camera 57c corresponds to a camera, control section 42 corresponds to a height detection section, and control section 42 corresponds to a control section.

In conveyance robot 40 described in detail above, engagement member 52 can be more reliably engaged with basket cart 12 to pull basket cart 12.

Further, conveyance robot 40 includes lifting and lowering device 46 that lifts and lowers engagement member 52 between the initial position lower than placement section 13 of basket cart 12 and the engagement position higher than the initial position, control section 42 processes the image of third camera 57c to detect the ground height of basket cart 12 (placement section 13), controls drive section 55 so that engagement member 52 enters the lower side of basket cart 12, and then controls lifting and lowering device 46 based on the ground height of basket cart 12 so that engagement member 52 is lifted to be engaged with placement section 13 of basket cart 12 within a range where there is no excess or deficiency in the lifting. Therefore, the required thrust can be reduced as compared with the case where basket cart 12 is raised and conveyed, and the energy consumption can be reduced and lifting and lowering device 46 can be downsized.

The present disclosure is not limited to the embodiment described above at all, and needless to say, the present disclosure can be carried out in various forms as long as the forms belong to the technical scope of the present disclosure.

In the above-described embodiment, in S 110 of the cart conveyance routine, the image of marker M is captured using third camera 57c. However, the image of marker M may be captured using fifth camera 57e.

In the above-described embodiment, basket cart 12 is pulled by conveyance robot 40. However, basket cart 12 may be raised and conveyed by conveyance robot 40. In this case, in S140 of the cart conveyance routine, the engagement position needs only to be set to a position slightly higher than the height of placement section 13 of basket cart 12.

In the above-described embodiment, marker M includes the identification information of basket cart 12. However, marker M may include identification information of a package placed on basket cart 12.

In S120 of the cart conveyance routine of the above-described embodiment, control section 42 may detect the ground height of placement section 13 based on a depth image created from the image data input from third camera 57c. In this case, control section 42 detects the ground height of placement section 13 as follows. First, control section 42 controls drive section 55 so that conveyance robot 40 approaches basket cart 12. Next, control section 42 recognizes marker M and casters 14 based on the image data input from third camera 57c. Subsequently, control section 42 creates the depth image based on the image data input from third camera 57c. Then, control section 42 acquires the distance from conveyance robot 40 (third camera 57c) to marker M based on the depth image. Control section 42 executes this process until the distance to marker M becomes a predetermined distance. Subsequently, control section 42 obtains the number of pixels from marker M to the lower end of caster 14. Then, control section 42 detects the ground height of placement section 13 by multiplying the obtained number of pixels by the length per pixel. The reason why the ground height of placement section 13 can be detected in this manner is that the distance to marker M is a predetermined distance (constant) and the length per pixel is a known length. When the distance between third camera 57c and marker M is not the predetermined distance, the ground height of placement section 13 needs only to be detected as follows. That is, first, control section 42 obtains the number of pixels from marker M to the lower end of caster 14. Then, control section 42 detects the ground height of placement section 13 by multiplying the obtained number of pixels by the length per pixel according to the distance between third camera 57c and marker M.

In the above-described embodiment, the ground height of placement section 13 is detected by recognizing marker M from the image of third camera 57c. However, the ground height of placement section 13 may be detected by recognizing the side surface of placement section 13 from the image of third camera 57c.

In the above-described embodiment, a cart conveyance routine as illustrated in Fig. 11 may be executed. In the cart conveyance routine illustrated in Fig. 11, the same step numbers are assigned to the same processes as those in the above-described embodiment, and detailed description thereof will be omitted. When this routine is started, control section 42 causes drive section 55 to move to the front of basket cart 12 to be moved, and controls drive section 55 so that vehicle body section 41 (horizontal section 41a) enters the lower side of basket cart 12 (placement section 13) (S130). Next, control section 42 controls lifting and lowering device 46 by speed feedback so that engagement member 52 is lifted at a constant speed (S200). Then, control section 42 receives a detected value of the torque of motor 56a from torque sensor 59 (S210). Subsequently, control section 42 determines whether the detected value of the torque input in S200 is equal to or more than a predetermined value (S220). When engagement member 52 comes into contact with placement section 13 during the speed feedback, the torque of motor 46 increases due to the action of the speed feedback. By detecting this, the engagement of engagement member 52 can be detected. When a negative determination is made in S220, control section 42 returns to S200 again. Meanwhile, when an affirmative determination is made in S220, control section 42 controls lifting and lowering device 46 so that the lifting of engagement member 52 is stopped (S230). Next, control section 42 controls drive section 55 so that basket cart 12 is conveyed to the destination (S160). Then, control section 42 controls lifting and lowering device 46 so that engagement member 52 is lowered to the initial position (S170). In S200, engagement member 52 may be lifted by the position control. The position control is performed by controlling the drive of motor 46a by feedback control based on the deviation between the position of engagement member 52 detected by a position sensor (not illustrated) and a target position so that the position coincides with the target position. In this case, the target position may be set to a position higher than the lower surface of placement section 13 regardless of the type of basket cart 12.

That is, a conveyance device capable of conveying a cart having multiple wheels at a bottom portion thereof may include a main body capable of traveling, an engagement member provided in the main body and capable of being lifted and lowered between an initial position lower than the bottom portion of the cart and an engagement position higher than the initial position by a lifting and lowering device, a motor serving as a drive source of the lifting and lowering device, a torque sensor capable of detecting a torque of the motor, and a control section that, after controlling the main body so that the engagement member enters a lower side of the cart, performs drive control of the motor by position control or speed control, and stops the drive of the motor to cause the engagement member to engage with the bottom portion of the cart when a detected value of the torque sensor becomes a predetermined value or more.

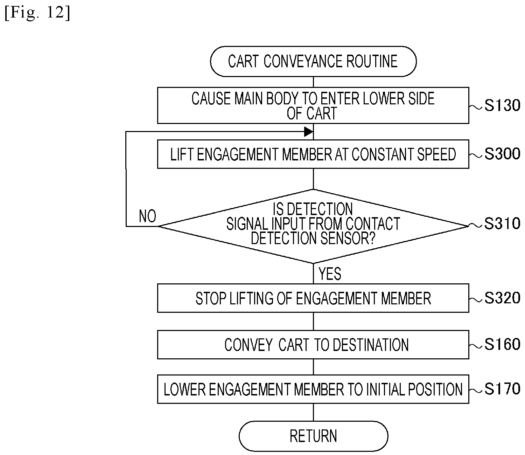

In the above-described embodiment, a cart conveyance routine as illustrated in Fig. 12 may be executed. In the cart conveyance routine illustrated in Fig. 12, the same step numbers are assigned to the same processes as those in the above-described embodiment, and detailed description thereof will be omitted. When this routine is started, control section 42 causes drive section 55 to move to the front of basket cart 12 to be moved, and controls drive section 55 so that vehicle body section 41 (horizontal section 41a) enters the lower side of basket cart 12 (placement section 13) (S130). Next, control section 42 controls lifting and lowering device 46 so that engagement member 52 is lifted at a constant speed (S300). Control section 42 waits until a contact detection signal is input from contact detection sensor 58 (S310). When the contact detection signal is input, control section 42 controls lifting and lowering device 46 so that the lifting of engagement member 52 is stopped (S320). Next, control section 42 controls drive section 55 so that basket cart 12 is conveyed to the destination (S160). Then, control section 42 controls lifting and lowering device 46 so that engagement member 52 is lowered to the initial position (S170).

That is, a conveyance device capable of conveying a cart having multiple wheels on a bottom portion thereof may include a main body capable of traveling, an engagement member provided in the main body and capable of being lifted and lowered between an initial position lower than the bottom portion of the cart and an engagement position higher than the initial position by a lifting and lowering device, a contact detection sensor capable of detecting contact between the engagement member and the bottom portion of the cart, and a control section that, after controlling the main body so that the engagement member enters a lower side of the cart, performs drive control of the lifting and lowering device so that the engagement member is lifted until a detection signal that the engagement member and the bottom portion of the cart are in contact with each other from the contact detection sensor is input and stops the drive of the lifting and lowering device to cause the engagement member to engage with the bottom portion of the cart when the detection signal is input from the contact detection sensor.

In the embodiment described above, the present disclosure is described as conveyance robot 40, but may be a conveyance method.

It should be noted that the present description also discloses a technical idea in which the "conveyance device according to claim 1 or 2" is changed to the "conveyance device according to any one of claims 1 to 3" in claim 4 at the beginning of the application.

### Industrial Applicability

The present disclosure can be used in a logistics center.

### Reference Signs List

10: delivery system, 12: basket cart, 13: placement section, 14: caster, 15: fence member, 16: engaged section , 18: delivery vehicle, 20: logistics center, 21: logistics PC, 22: control section, 23: storage section, 24: delivery management information, 26: map information, 28: communication section, 30: waiting space, 31: door, 32: wall portion, 33: charging device, 40: conveyance robot, 41: vehicle body section, 42: control section, 43: storage section, 44: loading section, 45: lifting and lowering section, 46: lifting and lowering device, 46a: motor, 47: elastic support member, 48: support body, 49: piston, 50: cylinder, 51: coupling member, 52: engagement member, 53: communication section, 55: drive section, 56: traveling wheel, 57: imaging section, 57a: first camera, 57b: second camera, 57c: third camera, 57d: fourth camera, 57e: fifth camera, 58: contact detection sensor, 59: torque sensor, 60: shop, 61: shop PC, 62: control section, 63: storage section, 64: delivery management information, 66: map information, 68: communication section, 69: display shelf, 70: central control device, 72: control section, 73: storage section, 74: delivery management information, 76: map information, 78: communication section, M: marker, N: network, S: spring.

## Claims

1. A conveyance device capable of conveying or pulling a cart having multiple wheels at a bottom portion thereof, the conveyance device comprising:
a main body configured to travel;
an engagement member provided in the main body and configured to engage at a predetermined position of the cart;
a camera configured to capture an image of the cart;
a height detection section configured to process the image of the camera to detect a height of the predetermined position of the cart; and
a control section configured to cause the engagement member to engage at the predetermined position of the cart based on the height of the predetermined position of the cart detected by the height detection section.

2. The conveyance device according to Claim 1, further comprising: a lifting and lowering device configured to lift and lower the engagement member between an initial position lower than the bottom portion of the cart and a position higher than the initial position,
wherein the predetermined position is the bottom portion of the cart, and
the control section controls the main body so that the engagement member enters a lower side of the cart, and then controls the lifting and lowering device so that the engagement member is lifted to engage at the predetermined position of the cart within a range in which excess or deficiency does not occur in lifting based on the height of the predetermined position of the cart.

3. The conveyance device according to Claim 1 or 2,
wherein the cart is provided with a tag member including identification information of the cart or identification information of a package placed on the cart,
the camera captures an image of the cart including the tag member, and
the height detection section detects the height of the predetermined position by recognizing the tag member from the image of the camera.

4. The conveyance device according to Claim 1 or 2,
wherein the camera is a depth camera, and
the height detection section creates a depth image based on an image captured by the camera and detects the height of the predetermined position based on a distance to the cart obtained from the depth image.

5. A conveyance method comprising:
capturing an image of a cart by a camera;
processing the image of the camera to detect a height of a predetermined position of the cart;
engaging an engagement member with the predetermined position of the cart; and
conveying or pulling the cart to a destination in a state where the engagement member is engaged with the cart.
